# EUROPEAN PATENT SPECIFICATION

(11) **EP 1 152 886 B1**
(45) Date of publication and mention of the grant of the patent: **07.10.2009**
(21) Application number: 99967562.2
(22) Date of filing: 23.12.1999
(51) Int. Cl.: B32B 3/10, G02F 1/1335

(54) **PLANAR REFLECTIVE LIGHT VALVE BACKPLANE AND METHOD FOR MANUFACTURING THE SAME**
FLACHE REFLEKTIERENDE RÜCKWAND EINES LICHTVENTILS UND VERFAHREN ZU DESSEN HERSTELLUNG
FACE ARRIERE POUR MODULATEUR PLAN DE LUMIERE REFLECHISSANTE ET SON PROCEDE DE FABRICATION

(30) Priority: 23.12.1998 US 219617; 23.12.1998 US 219579
(43) Date of publication of application: 14.11.2001
(73) Proprietor: Aurora Systems, Inc., San Jose, CA 95134 (US)
(72) Inventor: HASKELL, Jacob, Daniel, Palo Alto, CA 94301 (US); HSU, Rong, Cupertino, CA 95014 (US)
(74) Representative: Steil, Christian
(86) International application number: PCT/US1999/030754
(87) International publication number: WO 2000/037248

(56) References cited:
- DE-A- 19 754 810
- US-A- 5 486 485
- US-A- 5 502 007
- US-A- 5 560 802
- US-A- 5 592 318
- US-A- 5 868 951
- PATENT ABSTRACTS OF JAPAN vol. 1999, no. 02, 26 February 1999 (1999-02-26) & JP 10 301145 A (SEMICONDUCTOR ENERGY LAB CO LTD), 13 November 1998 (1998-11-13)
- COLGAN E G ET AL: "ON-CHIP METALLIZATION LAYERS FOR REFLECTIVE LIGHT VALVES" IBM JOURNAL OF RESEARCH AND DEVELOPMENT, IBM CORPORATION, ARMONK, US, vol. 42, no. 3/4, May 1998 (1998-05), pages 339-345, XP000955352 ISSN: 0018-8646

## Description

The present invention relates to a reflective display device comprising:
- a reflective backplane;
- a plurality of pixel mirrors formed on said reflective backplane, said pixel mirrors defining gaps therebetween;
- a fill layer formed in said gaps and over said pixel mirrors,
wherein said fill layer is an oxide layer having a substantially planar, in particular etched, top surface.

The present invention also relates to a method comprising the steps of:
- providing a reflective display backplane including a plurality of pixel mirrors defining gaps therebetween;
- forming a fill layer in said gaps and over said pixel mirrors, wherein said step of forming said fill layer comprises a step of forming an oxide layer in said gaps and over said pixel mirrors; and
- etching said fill layer to form a planar top surface of said fill layer.

Such a device and such a method are known from JP 10-301145.

### BACKGROUND OF THE INVENTION

### Field of the Invention

This invention relates generally to planarized, wafer-based integrated circuits, and more particularly to a novel planar integrated circuit having optical elements disposed on its surface. Even more particularly, the invention relates to a novel, planar, wafer-based reflective light valve backplane.

This invention also relates generally to a method for planarizing wafer-based integrated circuits, and more particularly to a novel method for planarizing the surface of an integrated circuit having optical elements disposed thereon. Even more particularly, the invention relates to a novel method for planarizing the reflective surface of a wafer-based, reflective light valve backplane.

### Description of the Background Art

Wafer-based reflective light valves have many advantages over their transmissive predecessors. For example, conventional transmissive displays are based on thin-film transistor (TFT) technology, whereby the displays are formed on a glass substrate, with the TFTs disposed in the spaces between the pixel apertures. Placing the driving circuitry between the pixel apertures limits the area of the display available for light transmission, and therefore limits the brightness of transmissive displays. In contrast, the driving circuitry of reflective displays is located under reflective pixel mirrors, and does not, therefore, consume valuable surface area of the display. As a result, reflective displays are more than twice as bright as their transmissive counterparts.

Another advantage of wafer-based reflective displays is that they can be manufactured with standard CMOS processes, and can therefore benefit from modem sub-micron CMOS technology. In particular, the reduced spacing between pixel mirrors increases the brightness of the display, and reduces the pixelated appearance of displayed images. Additionally, the CMOS circuitry switches at speeds one or more orders of magnitude faster than comparable TFT circuitry, making wafer-based reflective displays well suited for high speed video applications such as projectors and camcorder view finders.

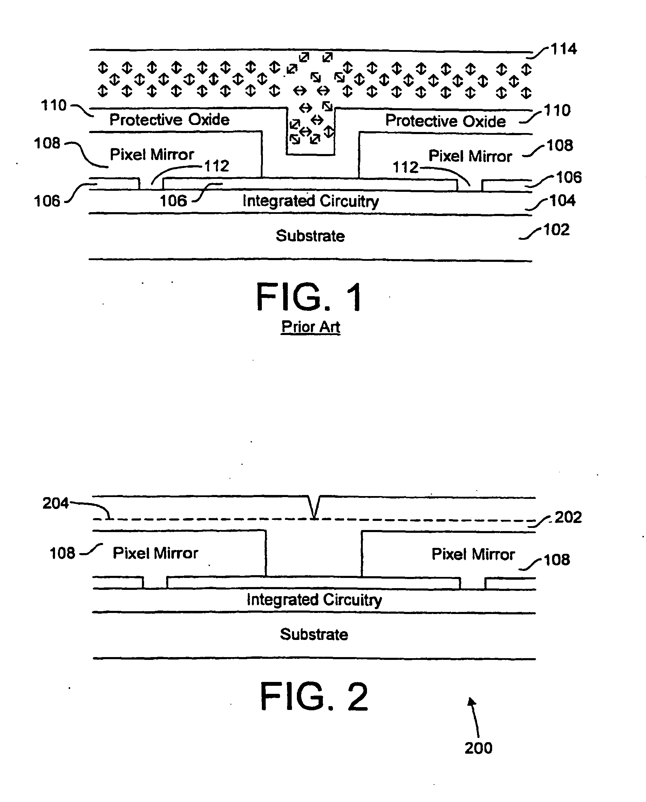

FIG. 1 is a cross-sectional view of a prior art reflective display backplane 100, which is formed on a silicon substrate 102, and includes a layer 104 of integrated circuitry, an insulating support layer 106, a plurality of pixel mirrors 108, and a protective oxide layer 110. Each of pixel mirrors 108 is connected, through an associated via 112, to the circuitry of layer 104. Backplane 100 is typically incorporated into a reflective light valve (e.g., a liquid crystal display) by forming a layer 114 of an optically active medium (e.g., liquid crystal) over the pixel mirrors, and forming a transparent electrode (not shown) over the optically active medium. Light passing through the medium is modulated (e.g., polarization rotated), depending on the electrical signals applied to pixel mirrors 108.

One problem associated with prior reflective displays is that the generated images often appear mottled. One source of mottling in reflective displays is the non-uniform alignment of the liquid crystals in layer 114. The formation of liquid crystal layer 114 typically includes a wiping or rubbing step, wherein a roller or similar object is passed over the liquid crystal layer, resulting in alignment of the liquid crystals. However, pixel mirrors 108 project upward from the surface of backplane 100, defining gaps between adjacent pixel mirrors. Known wiping processes are ineffective to align the liquid crystals (represented by arrows in layer 114) in these gaps. Additionally, the misaligned crystals adversely affect the alignment of neighboring crystals in layer 114.

What is needed is a reflective backplane with a planar surface to facilitate the effective alignment of the entire liquid crystal layer.

In many cases (e.g., substrates including optical elements) it is necessary to maintain strict control over the thickness of films remaining on the surface, because the thickness of films over optical elements is often critical to the proper optical functionality of the element.

What is also needed, therefore, is a method for planarizing the surface of substrates having optical elements disposed on their surface, while maintaining control over the thickness of any layers remaining over the optical elements.

As related prior art, the following documents are to be mentioned. US 5,502,007. is directed to planarizing an intermediate insulating layer of a semiconductor device, where the insulating layer provides the basis for additional circuitry to be formed. This document suggests to use a first insulator film and a second insulator film, where the first insulator film has a lower polishing rate than the second insulator film so that when polishing the second insulator film the first insulator film acts as a polishing stopper. US 5,592,318 teaches to form a fill layer over unfinished pixel electrodes and to polish the film layer so as to be the same level as that of the surfaces of the finished pixel electrodes. Concerning the desired thicknesses, the proposed process is not easy to control and also does not provide an optical thin film over the pixel mirrors. DE 197 54 810 A1 describes a highly reflective surface with multiple layers, wherein the thicknesses of these layers is provided in such a manner that reflected light waves are amplified by superposition.

JP 10-301145 mentioned at the outset, is directed at preventing the light leakage from spacings between pixel electrodes and to eliminating differences in level so that good image quality free from declination can be obtained. It is proposed to apply an insulating film to an insulating layer and then to polish the insulating film by a chemical-mechanical polishing process to flatten the film. By this process both the front surfaces of transparent pixel electrodes and the parts of the insulating film between the electrodes are planarized.

US 5,560,802 discloses a structure and a method for chemical-mechanical polishing of a semiconductor body. A first film having a first removal rate and a second film having a second removal rate are deposited. A chemical-mechanical polishing process is then applied to planarize the surface of the semiconductor body.

However, the proposed processes are not well-suited for a reflective display device, where the thickness of any layers remaining over the pixel mirrors needs to be tightly controlled.

It is an object of the present invention, to provide a reflective display device having a tightly controlled fill layer formed over the pixel mirrors and a method for providing pixel mirrors with a tightly controlled fill layer.

This object is achieved by the reflective display device mentioned at the outset, further characterized in that a portion of the oxide layer over the pixel mirrors forms at least a portion of an optical thin film layer.

This object is also achieved by the method mentioned at the outset, characterized in that the step of etching the fill layer comprises etching the fill layer to form an optical thin film layer over the pixel mirrors.

In a particular embodiment, the substrate is an integrated circuit, and the surface projections are optical elements. In a more particular embodiment, the substrate is a reflective display backplane, and the surface projections are pixel mirrors.

In one embodiment, the fill layer is a spin-on-coating, for example spin-on-glass. Optionally, the fill layer can be doped with a light absorbing dopant, such as colored dye.

The etch-resistant layer may include an optical thin film layer, and may be formed as a single layer. Optionally, the etch-resistant layer includes a plurality of sublayers, for example an optical thin film layer and an etch-resistant cap layer. In one embodiment, the optical thin film layer is an oxide layer, and the etch-resistant cap layer is a nitride layer.

A more particular embodiment further includes an optional protective layer formed over the etch-resistant layer and the fill layer. The protective layer may be formed as a single layer or, optionally, may include a plurality of sublayers. For example, in a disclosed embodiment, the protective layer includes an oxide layer and a nitride layer.

The protective layer also fills in any step-down from the top surface of the etch-resistant layer overlying the pixel mirrors and the top surface of the fill layer remaining in the gaps, formed by over-etching the fill layer. Where the step-down is less than or equal to 1200Å, the protective layer is sufficient to fill the step-down and form a planar surface on the wafer-based device.

In a particular method, the substrate is an integrated circuit and the projections are optical elements. In a more particular method, the substrate is a reflective display backplane, and the projections are pixel mirrors.

The etch-resistant layer may include an optical thin film layer, and may be formed as a single layer. Optionally, the etch-resistant layer includes a plurality of sublayers, for example an optical thin film layer and an etch-resistant cap layer. In a particular method, the step of forming the etch-resistant layer includes a step of forming an oxide layer and a second step of forming a nitride layer on the oxide layer.

The step of forming a fill layer on the etch-resistant layer may include the step of applying a spin-on coating (e.g., spin-on glass) over the etch-resistant layer. Optionally, the fill layer includes a suitable dopant to absorb light of a particular wave length or wavelengths.

The method of the present invention further includes an optional step of forming a protective layer over the exposed portions of the etch-resistant layer and the remaining portions of the fill layer. The protective layer may include a single layer or multiple layers. For example, in a particular disclosed method, the step of forming the protective layer includes a first step of forming an oxide layer over the exposed portions of the etch-resistant layer and the remaining portions of the fill layer, and a second step of forming a nitride layer over the oxide layer.

### BRIEF DESCRIPTION OF THE DRAWINGS

The present invention is described with reference to the following drawings, wherein like reference numbers denote substantially similar elements:
FIG. 1 is a cross-sectional view of a prior art reflective light-valve backplane;
FIG. 2 is a cross-sectional view of a reflective light-valve backplane having a thick protective layer deposited thereon;
FIG. 3 is a cross sectional view of a reflective light-valve backplane, illustrating one planarization technique;
FIG. 4 is a cross-sectional view of a reflective light-valve backplane having an etch-resistant layer and a fill layer deposited thereon;
FIG. 5 is a cross-sectional view of the reflective light-valve backplane of FIG. 4, after a selective etch of the deposited fill layer;
FIG. 6 is a cross-sectional view of the reflective light-valve backplane of FIG. 5, having a protective layer deposited thereon;
FIG. 7 is a flow chart summarizing a method of forming a planarized a wafer-based integrated circuit, according to the present invention;
FIG. 8 is a cross-sectional view of a reflective light-valve backplane planarized according to another method of the present invention;
FIG. 9 is a cross-sectional view of the reflective light-valve backplane of FIG. 8, having a protective layer deposited thereon; and
FIG. 10 is a flow chart summarizing the method of forming the reflective light-valve backplane of FIG. 9.

### DETAILED DESCRIPTION

This patent application is related to the following co-pending U.S. patent application, filed on December 23, 1998 and assigned to a common assignee:
Combination CMP-Etch Method For Forming A Thin Planar Layer Over The Surface Of A Device, U.S. Patent Application Serial No. 09/220,814, by Jacob D. Haskell and Rong Hsu.

The present invention overcomes the problems associated with the prior art, by providing a planar, wafer-based device (e.g., a reflective display backplane) including a substrate having a plurality of surface projections (e.g. pixel mirrors) and a fill layer filling the gaps between the surface projections. Specifically, the present invention describes a wafer-based reflective light-value backplane, having a planar reflective surface which reduces mottling in generated images. The present invention also overcomes the problems associated with the prior art, by providing a method of planarizing a substrate having a plurality of surface projections. Specifically, the present invention describes a method for planarizing a substrate while maintaining the thickness of optical film layers deposited thereon.

In the following description, numerous specific details are set forth (e.g., specific compositions and thicknesses of optical, etch-resistant, and protective layers) in order to provide a thorough understanding of the invention. Those skilled in the art will recognize, however, that the invention may be practiced apart from these specific details. In other instances, well known details of semiconductor processing and optical thin film coatings have been omitted, so as not to unnecessarily obscure the present invention.

FIG. 2 is a cross sectional view of a reflective backplane 200, illustrating one method of planarizing the surface of reflective backplane 200 by depositing a thick protective oxide layer 202 and then etching layer 202 back to a desired thickness level 204. In particular, as oxide layer 202 is deposited, the gap between pixel mirrors 108 is filled. Thus, oxide layer 202 functions as a fill layer. Oxide layer 202 is then etched back to level 204, leaving a planar surface over backplane 200. This method is effective to planarize the surface of backplane 200, but suffers from the disadvantage that it is difficult to control the thickness of layer 202 remaining over pixel mirrors 108 following the etch step.

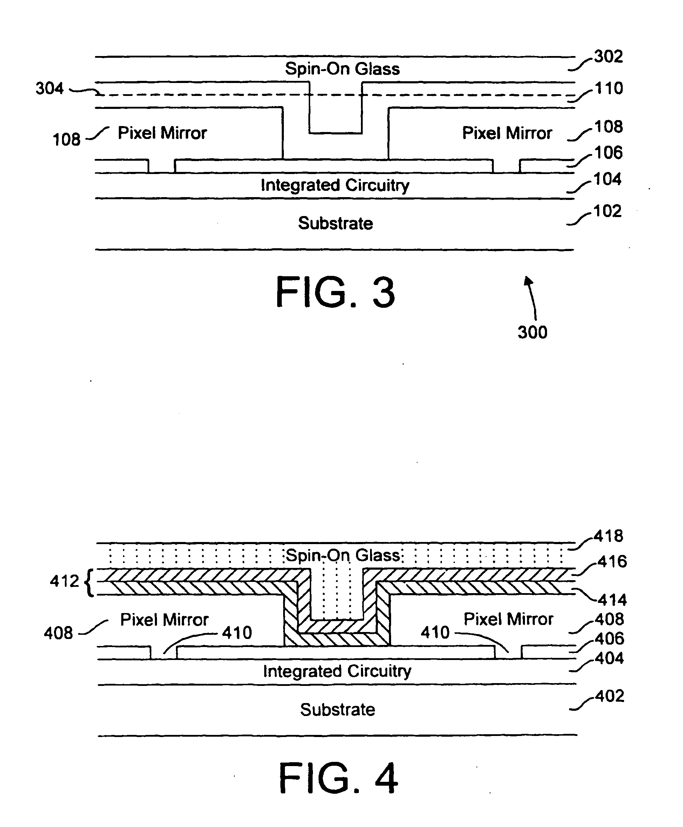

FIG. 3 is a cross sectional view of a reflective display backplane 300 formed by planarizing the surface of reflective backplane 100 shown in FIG. 1, according to another method of the present invention. Backplane 300 is planarized by applying a fill layer 302 (e.g., spin-on glass) over protective oxide layer 110. After its application, fill layer 302 is etched back to a level 304, leaving the fill layer disposed in the gap between pixel mirrors 108 and an oxide layer overlying pixel mirrors 108. This method of planarizing the surface of reflective backplane 300 also suffers from the disadvantage that it is difficult to control the thickness of protective oxide layer 110 remaining over pixel mirrors 108 following the etch back.

FIG. 4. is a cross sectional view of a reflective backplane 400 during the first steps of another novel planarization process according to the present invention. Reflective backplane 400 is formed on a silicon substrate 402 which includes a layer 404 of integrated circuitry, an insulating support layer 406, and a plurality of pixel mirrors 408. Integrated circuitry layer 404 receives display data from a data source (not shown) and controls the assertion of the display data on pixel mirrors 408. Insulating support layer 406 provides support for pixel mirrors 408 and insulates pixel mirrors 408 from integrated circuitry layer 404. Each pixel mirror 408 is coupled to integrated circuitry layer 404 by an associated via 410 through support layer 406.

During the first step of the planarization process an etch-resistant layer 412 is formed over pixel mirrors 408 and over portions of insulating support layer 406 exposed by the gaps between pixel mirrors 408. Etch-resistant layer 412 includes an optical thin film layer 414 and an etch-resistant cap layer 416. Optical thin film layer 414 optimizes the reflective performance of pixel mirrors 408 via thin film interference. Using means well known to those skilled in the optical arts, the thicknesses of such films are engineered to reinforce the refection of desirable wavelengths of light through constructive interference, and to inhibit unwanted reflections through destructive interference. The thickness of a thin film optical coating is, therefore, critical to its functionality.

Etch-resistant cap layer 416 protects optical thin film layer 414 from subsequent processing etches, insuring that its thickness remains unchanged. Additionally, etch-resistant cap layer 416 also functions as an optical thin film layer. Those skilled in the art will understand, therefore, that etch-resistant layer 412 including optical thin film layer 414 may also be properly understood to be an optical thin film coating 412 including etch resistant cap layer 416.

In a particular embodiment optical thin film layer 414 is formed by depositing silicon oxide to a thickness of 680Å (±10%). Etch-resistant cap layer 416 is formed by depositing silicon nitride to a thickness of 820Å (±10%). Those skilled in the art will recognize, however, that optical thin film coatings of varying compositions and thicknesses may be substituted for optical thin film layer 414. Similarly, etch-resistant cap layers of varying thicknesses and compositions may be substituted for etch-resistant cap layer 416. In an alternate embodiment, etch-resistant layer 412 is formed as a single layer of a material (e.g., nitride) which is both etch-resistant and functional as an optical thin film.

During the next step in the planarization process, a fill layer 418 is deposited over etch-resistant layer 412. In a particular embodiment, fill layer 418 is formed with a spin-on glass material (e.g., Dow Coming product C2052154D SOG FOX-15), using methods well known to those skilled in the art of silicon processing. Preferably, the fill material has a low dielectric constant (e.g., on the order of 3.0), so as to minimize the electrical coupling between adjacent pixel mirrors.

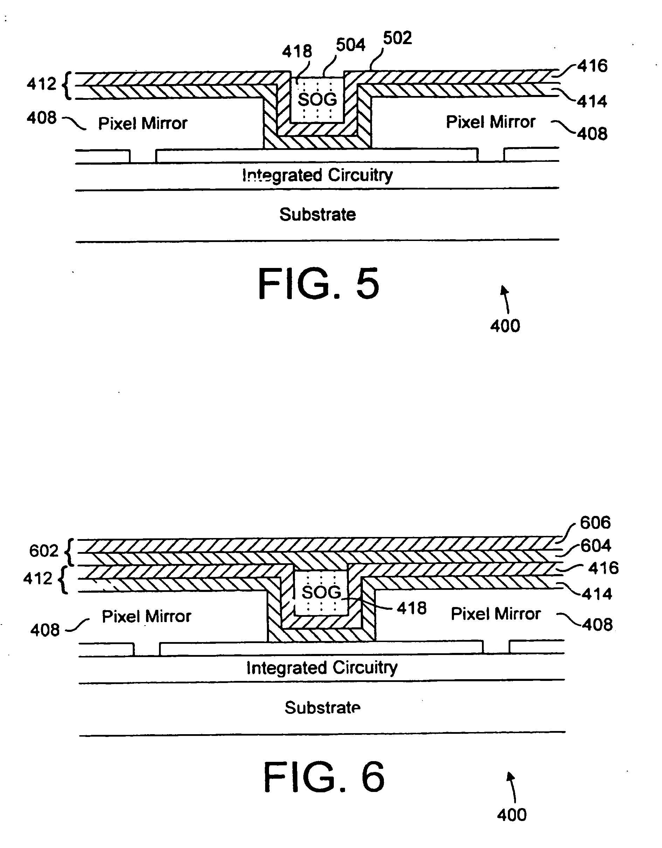

FIG. 5 shows a cross sectional view of reflective backplane 400 following an etching step wherein fill layer 418 is etched for a period of time sufficient to expose portions of etch-resistant layer 412 overlying pixel mirrors 408, but leaving portions of fill layer 418 in the gap between pixel mirrors 408. Either a wet chemical etch (e.g., hydrofluoric acid) or a dry etch (e.g., plasma etch) may used to perform the etch step, but the wet etch exhibits greater selectivity between the etch-resistant layer and the fill layer.

Because etch-resistant layer 412 is resistant to the etchant used to remove fill layer 418, over etching fill layer 418 will not effect the thickness of etch-resistant layer 412, particularly optical thin film layer 414. Over etching fill layer 418 will, however, result in the removal of a portion of fill layer 418 from the gap between pixel mirrors 408, creating a step down from the top surface 502 of etch-resistant layer 416 to the top surface 504 of fill layer 418. A step down of less than or equal to 1,200Å is acceptable, and will be filled by the formation of subsequent layers as described below.

FIG. 6 is a cross sectional view of reflective backplane 400 following the deposition of a protective layer 602. Protective layer 602 includes an oxide layer 604 and a nitride layer 606. Oxide layer 604 is formed over etch-resistant layer 412 and fill layer 418, and fills in the step down from etch-resistant cap layer 416 to fill layer 418, so long as the step down is less than or equal to 1,200Å. Nitride layer 606 is formed on oxide layer 604. The portion of oxide layer 604 overlying pixel mirrors 408 has a thickness of 680Å (±10%), and nitride layer 606 has a thickness of 1,200Å (±10%).

Protective layer 602 makes the surface of reflective backplane 400 more robust, so as to be able to withstand further processing in the construction of a reflective light valve. For example, in constructing a liquid crystal display, a polyimide coating is physically wiped onto the reflective backplane. Without a protective coating, this wiping step would destroy the reflective backplane.

Protective layer 602 also functions as an optical thin film coating. Further, protective layer 602 and etch-resistant layer 412 may be considered to form a multilayered optical thin film coating. The use of such multilayered coatings typically results in better optical performance over a wider optical spectrum.

Those skilled in the art will recognize that alternative protective coatings may be substituted for protective layer 602. For example, oxide layer 604 and nitride layer 606 could be replaced with a single protective layer of, for example, a doped oxide or a silicon-oxynitride. Alternatively, an optical coating including many sub-layers engineered to obtain the desired optical performance may be substituted for protective layer 602, so long as the multilayered coating possesses the desired ruggedness.

Reflective display backplane 400 is superior to prior art reflective backplanes for a number of reasons. First, the planar surface of reflective backplane 400 eliminates spurious reflections of light off of the lateral edges of pixel mirrors 408. Second, the robust planar surface of reflective backplane 400 facilitates the easy application of subsequently applied display materials, for example, polyimide and/or liquid crystal material. Further, the planar surface facilitates the uniform alignment of the applied liquid crystals. Additionally, reflective backplane 400 can be manufactured entirely by standard silicon manufacturing procedures, and may, therefore, be inexpensively manufactured by existing silicon manufacturing facilities.

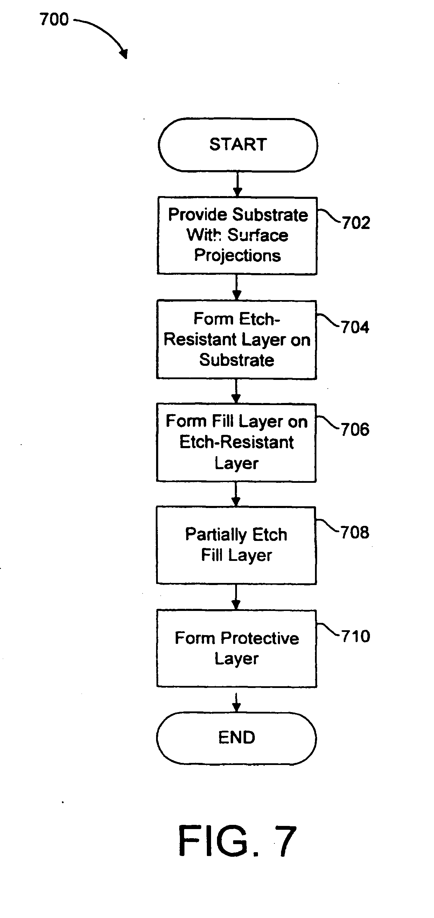

FIG. 7 is a flow chart summarizing a method 700 of forming a planarized, wafer-based device according to the present invention. Method 700 includes a first step 702 of providing a substrate with surface projections. In a particular embodiment, the substrate is a reflective display backplane and the projections are pixel mirrors, but those skilled in the art will recognize that the present invention may be embodied in other devices, for example, other integrated circuits having optical elements disposed on their surfaces.

Next, in a second step 704, an etch-resistant layer is formed on the substrate including the surface projections and the gaps defined therebetween. Those skilled in the art will recognize that the etch-resistant layer formed in second step 704 may include a number of sublayers. For example, as described above with reference to FIGs. 4 through 6, the etch-resistant layer may be formed by first applying one or more optical thin film layers, and then forming an etch-resistant cap layer over the optical thin film layer.

Next, in a third step 706, a fill layer is formed over the etch-resistant layer. The fill layer is formed sufficiently thick to fill the gaps between the pixel mirrors and cover the etch-resistant layer overlying the pixel mirrors.

Next in a fourth step 708, the fill layer is etched back to expose the portions of the etch-resistant layer overlying the surface projections, but leaving the portions of the fill layer in the gaps between the surface projections.

Finally, in a fifth step 710, a protective layer is formed over the exposed etch-resistant layer and the fill layer disposed in the gaps between the surface projections. The protective layer serves as both a passivation layer and physical protection layer. In a particular method the protective layer includes multiple sublayers, and fifth step 710 includes the substeps of forming each of the respective sublayers. For example, as disclosed with reference to FIG. 6, protective layer 602 if formed by first forming an oxide layer 604 and then forming a nitride layer 606 on oxide layer 604.

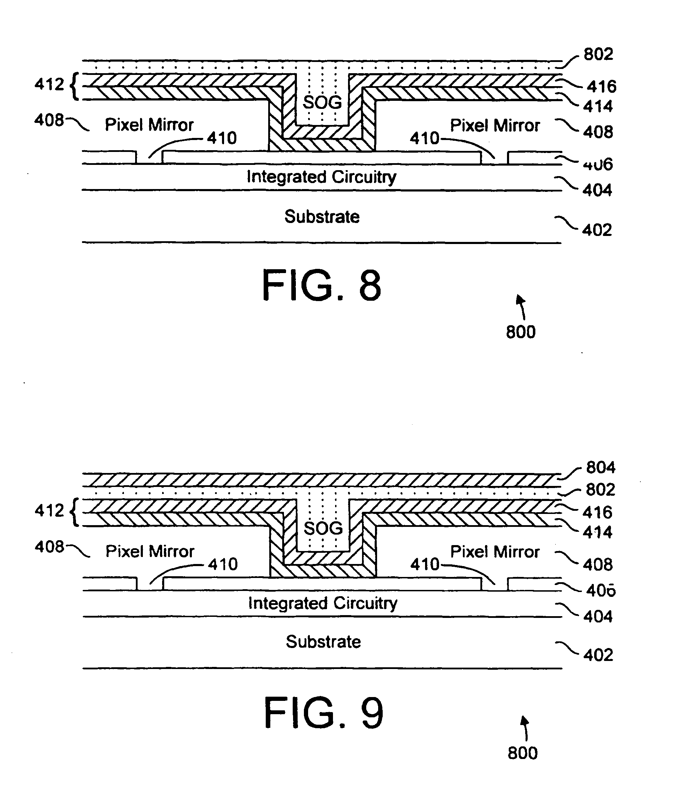

FIG. 8 is a cross-sectional view of a planar reflective backplane 800 formed by an alternate planarization method, wherein no etch step is required. Instead, a fill layer 802 is formed over layer 416, so as to fill the interpixel gaps, and also to form a part of the multi-layered coating overlying pixel mirrors 408. In this particular embodiment, fill layer 802 is a spin-on coating. The thickness of the portion of layer 802 overlying pixel mirrors 408 is controlled by adjusting the viscosity of the spin-on material, the spin speed, and the process temperature. For example, applying a spin-on glass material available from Dow Coming as material number C2052154D SOG FOX-15, at a spin speed of 2,200 RPM, forms a fill layer having a thickness of approximately 3,580 Å.

In this particular embodiment, layer 414 is a 750 Å oxide layer, layer 416 is a 615 Å nitride layer, and the portion of fill layer 802 over pixel mirrors 408 is a 1,000 Å spin-on glass layer. Those skilled in the art will recognize, however, that because there is no etch step involved in this planarization process, layer 416 need not be etch resistant, and that layers 414 and 416 can, therefore, be substituted for or omitted.

FIG. 9 is a cross-sectional view showing reflective backplane 800 with a protective layer 804 deposited over fill layer 802. Protective layer 804 provides added durability to reflective backplane 800, and forms the fourth layer in a multi-layered optical coating including layers 414, 416, 802, and 804. In the particular embodiment shown in FIG. 8 and FIG. 9, protective layer 804 is a 1,190 Å nitride layer. Those skilled in the optical arts will understand that the thicknesses and compositions of layers 414, 416, 802, and 804 can be adjusted to enhance or subdue particular portions of the optical spectrum.

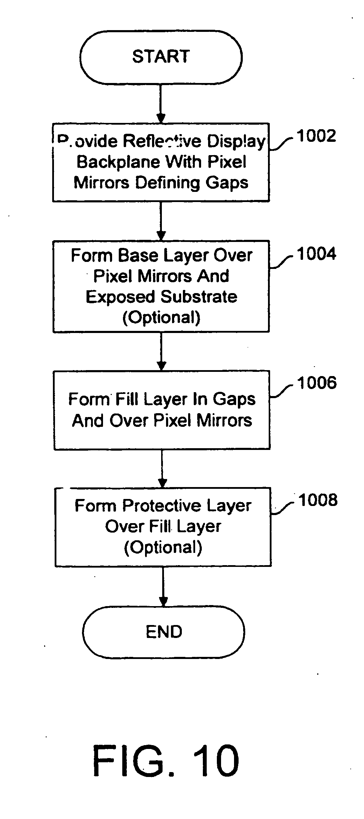

FIG. 10 is a flow chart summarizing one method 1000 of planarizing a reflective backplane, without the necessity of an etch step. In a first step 1002, a reflective display backplane with pixel mirrors defining gaps therebetween is provided for planarization. Those skilled in the art will understand that method 1000 is only one particular method of practicing the present invention, and that the method of the present invention is also applicable to other useful to planarize other devices having optical elements disposed on their surfaces.

Next, in a second step 1004, a base layer (e.g., layer 412) is formed over pixel mirrors 408 and the portions of support layer 406 exposed by the gaps between pixel mirrors 408. Because method 1000 does not require an etch step, the base layer need not be etch resistant. The material and thickness of the base layer may, therefore, be selected purely based on its intended function (e.g., passivation, optical properties, etc.). In fact, as long as the materials of pixel mirrors 408 and fill layer 802 are compatible, the base layer may be omitted, and should therefore be considered optional.

Then, in a third step 1006, fill layer 802 is formed over the base layer to fill the gaps between pixel mirrors 408. In this particular method, fill layer 802 is formed by applying a spin-on coating (e.g., spin-on glass). The parameters of the spin-on process (e.g., spin speed, material viscosity, temperature, etc.) are adjusted to control the thickness of the portion of fill layer 802 overlying pixel mirrors 408.

Finally, in a fourth step 1008, protective layer 804 is formed over fill layer 802. As indicated above, protective layer 804 provides added ruggedness and durability to reflective backplane 800, to facilitate, among other the things, the wiping step associated with the application of liquid crystal material. However, if fill layer 802 is sufficient rugged, protective layer 804 can be omitted, and fourth step 1008 is, therefore, optional.

Those skilled in the art will understand that all layers formed over pixel mirrors 408 affect the optical performance of reflective backplane 800, and therefore serve, to some extent, as an optical coating. Some layers in this multilayered coating provide additional functions (e.g., passivation, protection, etc.), and those layers' positions are therefore dictated by their associated function. Other layers, however, are provided purely for optical purposes, and can, therefore, be disposed either above or below fill layer 802.

Accordingly, the particular disposition of fill layer 802, with respect to the other layers of the device, is not considered to be an essential element of the present invention. For example, planar devices may be formed by depositing protective layer 602 directly over etch resistant layer 412, and then depositing fill layer 418 over layer 412. As long as layer 602 is also etch resistant, the thicknesses of layers 412 and 602 will be maintained during subsequent etch steps. If subsequent etch steps are unnecessary, protective layer 602 need not be etch resistant.

The following values are preferred for the various thicknesses:
- The cap layer over the oxide layer has a thickness in the range of 640 Å (± 10 %).
- The portion of the oxide layer over the pixel mirrors has a thickness in the range of 750 Å (± 10 %).
- If the cap layer over the oxide layer, as mentioned above, comprises a nitride layer, the nitride layer has a thickness in the range of 640 Å (± 10 %).
- If a protective layer is disposed over the cap layer which is over the oxide layer and if the protective layer comprises an oxide layer which has a nitride layer disposed over it, the nitride layer has a thickness in the range of 1,200 Å (± 10 %).
- If a protective layer is disposed over the cap layer which is over the oxide layer and if the protective layer comprises an oxide layer which has a nitride layer disposed over it, the oxide layer of the protective layer has a thickness in the range of 840 Å (± 10 %).

The description of particular embodiments of the present invention is now complete. Many of the described features may be substituted, altered or omitted. For example, a fill layer may be formed from other than a spin-on material. Additionally, a material of suitable strength and durability may be used in forming the etch-resistant layer, such that the additional formation of the protective layer may be omitted. The invention may be embodied in any device where a planar surface is desirable over a substrate having a plurality of surface projections while maintaining the thickness of layers formed over the projections, or maintaining the thickness of the projections themselves. The method of the present invention may be employed wherever it is desirable to planarize a substrate having a plurality of surface projections while maintaining the thickness of layers formed over the projections, or maintaining the thickness of the projections themselves.

## Claims

1. A reflective display device comprising:
a reflective backplane (200);
a plurality of pixel mirrors (108) formed on said reflective backplane (200), said pixel mirrors (108) defining gaps therebetween; and
a fill layer formed in said gaps and over said pixel mirrors (108),
wherein said fill layer is an oxide layer (202) having a substantially planar, in particular etched, top surface,
**characterized in that**
a portion of said oxide layer (202) over said pixel mirrors (108) forms at least a portion of an optical thin film layer.

2. The device of claim 1, further comprising a cap layer over said oxide layer (202).

3. The device of claim 2, wherein said cap layer is optically inactive.

4. The device of claim 2, wherein said cap layer has a thickness in the range of 640 Å (± 10%).

5. The device of claim 1, wherein the portion of said oxide layer over said pixel mirrors has a thickness in the range of 750 Å (± 10%).

6. The device of claim 5, further comprising a cap layer over said oxide layer (202).

7. The device of claim 2 or 6, wherein the cap layer comprises a nitride layer.

8. The device of claim 7, wherein:
the portion of said oxide layer (202) over said pixel mirrors (108) has a thickness in the range of 750 Å (± 10%); and
said nitride layer has a thickness in the range of 640 Å (± 10%).

9. The device of claim 1, further comprising:
a cap layer (412) over said oxide layer (202); and
a protective layer (602) disposed over said cap layer (412).

10. The device of claim 9, wherein said protective layer (602) comprises an oxide layer (604).

11. The device of claim 10, wherein said protective layer (602) further comprises a nitride layer (606) disposed over said oxide layer (604) of said protective layer (602).

12. The device of claim 11, wherein said nitride layer (606) has a thickness in the range of 1,200 Å (± 10%).

13. The device of claim 11, wherein said oxide layer (604) of said protective layer (602) has a thickness in the range of 840 Å (± 10%).

14. The device of claim 11, wherein:
said oxide layer (604) of said protective layer (602) has a thickness in the range of 840 Å (± 10%); and
said nitride layer (606) has a thickness in the range of 1,200 Å (± 10%).

15. A method comprising the steps of:
providing a reflective display backplane (200) including a plurality of pixel mirrors (108) defining gaps therebetween;
forming a fill layer in said gaps and over said pixel mirrors (108), wherein said step of forming said fill layer comprises a step of forming an oxide layer (202) in said gaps and over said pixel mirrors (108); and
etching said fill layer to form a planar top surface of said fill layer,
**characterized in that**
said step of etching said fill layer comprises etching said fill layer to form an optical thin film layer over said pixel mirrors (108).

16. The method of claim 15, further comprising a step of depositing a cap layer over said optical thin film layer.

17. The method of claim 16, wherein said cap layer is optically inactive.

18. The method of claim 16, wherein said cap layer has a thickness in the range of 640 Å (± 10%).

19. The method of claim 16, wherein said cap layer comprises a nitride layer.

20. The method of claim 19, wherein:
said oxide layer has a thickness in the range of 750 Å (± 10%); and
said nitride layer has a thickness in the range of 640 Å (± 10%).

21. The method of claim 15, wherein said optical thin film layer has a thickness in the range of 750 Å (± 10%).

22. The method of claim 15, further comprising the step of forming a protective layer over said fill layer following said step of etching said fill layer.

23. The method of claim 22, wherein said step of forming said protective layer (602) comprises a step of forming a cap layer on said fill layer and forming an oxide layer (604) on said cap layer (412).

24. The method of claim 23, wherein said step of forming said protective layer (602) further comprises a step of forming a nitride layer (606) on said oxide layer (604).

25. The method of claim 24, wherein said nitride layer (606) has a thickness in the range of 1,200 Å (± 10%).

26. The method of claim 23, wherein said oxide layer (604) has a thickness in the range of 840 Å (± 10%).

27. The method of claim 23, wherein said step of forming said protective layer (602) further comprises a step of forming a nitride layer (606) on said oxide layer (604).

28. The method of claim 27, wherein:
said oxide layer (604) has a thickness in the range of 840 Å (± 10%); and
said nitride layer (606) has a thickness in the range of 1,200 Å (± 10%).

29. The method of claim 15, wherein said step of etching said fill layer includes leaving at least some of said fill layer over said pixel mirrors (108).

## Patentansprüche

1. Reflektierendes-Display-Vorrichtung mit:
einer reflektierenden Rückwand (200);
einer Vielzahl von Pixelspiegeln (108), die auf der reflektierenden Rückwand (200) ausgebildet sind, wobei die Pixelspiegel (108) zwischen einander Lücken definieren; und
einer Füllschicht, die in den Lücken und über den Pixelspiegeln (108) ausgebildet ist,
wobei die Füllschicht eine Oxidschicht (202) ist, die eine im Wesentlichen planare, insbesondere geätzte, obere Oberfläche hat,
**dadurch gekennzeichnet, dass**
ein Teil der Oxidschicht (202) über den Pixelspiegeln (108) zumindest einen Teil einer optischen Dünnfilmschicht bildet.

2. Vorrichtung nach Anspruch 1, ferner mit einer Deckschicht über der Oxidschicht (202).

3. Vorrichtung nach Anspruch 2, wobei die Deckschicht optisch inaktiv ist.

4. Vorrichtung nach Anspruch 2, wobei die Deckschicht eine Dicke im Bereich von 640 Å (± 10%) hat.

5. Vorrichtung nach Anspruch 1, wobei der Teil der Oxidschicht über den Pixelspiegeln eine Stärke im Bereich von 750 Å (± 10%) hat.

6. Vorrichtung nach Anspruch 5, ferner mit einer Deckschicht über der Oxidschicht (202).

7. Vorrichtung nach Anspruch 2 oder 6, wobei die Deckschicht eine Nitridschicht aufweist.

8. Vorrichtung nach Anspruch 7, wobei:
der Teil der Oxidschicht (202) über den Pixelspiegeln (108) eine Stärke im Bereich von 750 Å (± 10%) hat; und
die Nitridschicht eine Stärke im Bereich von 640 Å (± 10%) hat.

9. Vorrichtung nach Anspruch 1, ferner mit:
einer Deckschicht (412) über der Oxidschicht (202); und
einer Schutzschicht (602), die über Deckschicht (412) aufgebracht ist.

10. Vorrichtung nach Anspruch nach Anspruch 9, wobei die Schutzschicht (602) eine Oxidschicht (604) aufweist.

11. Vorrichtung nach Anspruch 10, wobei die Schutzschicht (602) des Weiteren eine Nitridschicht (606) aufweist, die über der Oxidschicht (604) der Schutzschicht (602) angeordnet ist.

12. Vorrichtung nach Anspruch 11, wobei die Nitridschicht (606) eine Stärke im Bereich von 1.200 Å (± 10%) hat.

13. Vorrichtung nach Anspruch 11, wobei die Oxidschicht (604) der Schutzschicht (602) eine Stärke im Bereich von 840 Å (± 10%) hat.

14. Vorrichtung nach Anspruch 11, wobei:
die Oxidschicht (604) der Schutzschicht (602) eine Stärke im Bereich von 840 Å (± 10%) hat; und
die Nitridschicht (606) eine Stärke im Bereich von 1.200 Å (± 10%) hat.

15. Verfahren mit den folgenden Schritten:
Bereitstellen einer Reflektierendes-Display-Rückwand (200) mit einer Vielzahl von Pixelspiegeln (108), die zwischen einander Lücken definieren;
Bilden einer Füllschicht in den Lücken und über den Pixelspiegeln (108), wobei der Schritt des Bildens der Füllschicht einen Schritt des Bildens einer Oxidschicht (202) in den Lücken und über den Pixelspiegeln (108) aufweist; und
Ätzen der Füllschicht, um eine planare obere Oberfläche der Füllschicht zu bilden,
**dadurch gekennzeichnet, dass**
der Schritt des Ätzens der Füllschicht ein Ätzen der Füllschicht mit dem Ziel aufweist, eine optische Dünnfilmschicht über den Pixelspiegeln (108) zu bilden.

16. Verfahren nach Anspruch 15, ferner mit dem Schritt eines Aufbringens einer Deckschicht über der optischen Dünnfilmschicht.

17. Verfahren nach Anspruch 16, wobei die Deckschicht optisch inaktiv ist.

18. Verfahren nach Anspruch 16, wobei die Deckschicht eine Stärke im Bereich von 640 Å (± 10%) hat.

19. Verfahren nach Anspruch 16, wobei die Deckschicht eine Nitridschicht aufweist.

20. Verfahren nach Anspruch 19, wobei
die Oxidschicht eine Stärke im Bereich von 750 Å (± 10%) hat; und
die Nitridschicht eine Stärke im Bereich von 640 Å (± 10%) hat.

21. Verfahren nach Anspruch 15, wobei die optische Dünnfilmschicht eine Stärke im Bereich von 750 Å (± 10%) hat.

22. Verfahren nach Anspruch 15, ferner mit dem Schritt des Bildens einer Schutzschicht über der Füllschicht, und zwar nach dem Schritt des Ätzens der Füllschicht.

23. Verfahren nach Anspruch 22, wobei der Schritt des Bildens der Schutzschicht (602) einen Schritt des Bildens einer Deckschicht auf der Füllschicht und das Bilden einer Oxidschicht (604) auf der Deckschicht (412) aufweist.

24. Verfahren nach Anspruch 23, wobei der Schritt des Bildens der Schutzschicht (602) des Weiteren einen Schritt des Bildens einer Nitridschicht (606) auf der Oxidschicht (604) aufweist.

25. Verfahren nach Anspruch 24, wobei die Nitridschicht (606) eine Stärke im Bereich von 1.200 Å (± 10%) hat.

26. Verfahren nach Anspruch 23, wobei die Oxidschicht (604) eine Stärke im Bereich von 840 Å (± 10%) hat.

27. Verfahren nach Anspruch 23, wobei der Schritt des Bildens der Schutzschicht (602) des Weiteren einen Schritt des Bildens einer Nitridschicht (606) auf der Oxidschicht (604) aufweist.

28. Verfahren nach Anspruch 27, wobei:
die Oxidschicht (604) eine Stärke im Bereich von 840 Å (± 10%) hat; und
die Nitridschicht (606) eine Stärke im Bereich von 1.200 Å (± 10%) hat.

29. Verfahren nach Anspruch 15, wobei der Schritt des Ätzens der Füllschicht umfasst, dass zumindest ein Teil der Füllschicht über den Pixelspiegeln (108) verbleibt.

## Revendications

1. Dispositif d'affichage réflexif comprenant :
un plan arrière réflectif (200) ;
une pluralité de miroirs à pixels (108) formés sur ledit plan arrière réflectif (200), lesdits miroirs à pixels (108) définissant des espaces entre ceux-ci ; et
une couche de remplissage formée dans lesdits espaces et par-dessus lesdits miroirs à pixels (108),
dans lequel ladite couche de remplissage est une couche d'oxyde (202) possédant une surface supérieure sensiblement plane, en particulier gravée,
**caractérisé en ce que**
une partie de ladite couche d'oxyde (202) par-dessus lesdits miroirs à pixels (108) forme au moins une partie d'une couche de film mince optique.

2. Dispositif selon la revendication 1, comprenant en outre une couche de couverture par-dessus ladite couche d'oxyde (202).

3. Dispositif selon la revendication 2, dans lequel ladite couche de couverture est optiquement inactive.

4. Dispositif selon la revendication 2, dans lequel ladite couche de couverture possède une épaisseur comprise dans la plage de 640 Å (± 10 %).

5. Dispositif selon la revendication 1, dans lequel la partie de ladite couche d'oxyde par-dessus lesdits miroirs à pixels possède une épaisseur comprise dans la plage de 750 Å (± 10 %).

6. Dispositif selon la revendication 5, comprenant en outre une couche de couverture par-dessus ladite couche d'oxyde (202).

7. Dispositif selon la revendication 2 ou 6, dans lequel la couche de couverture comprend une couche de nitrure.

8. Dispositif selon la revendication 7, dans lequel:
la partie de ladite couche d'oxyde (202) par-dessus lesdits miroirs à pixels (108) possède une épaisseur comprise dans la plage de 750 Å (± 10 %) ; et
ladite couche de nitrure possède une épaisseur comprise dans la plage de 640 Å (± 10 %).

9. Dispositif selon la revendication 1, comprenant en outre :
une couche de couverture (412) par-dessus ladite couche d'oxyde (202) ; et
une couche protectrice (602) disposée par-dessus ladite couche de couverture (412).

10. Dispositif selon la revendication 9, dans lequel ladite couche protectrice (602) comprend une couche d'oxyde (604).

11. Dispositif selon la revendication 10, dans lequel ladite couche protectrice (602) comprend en outre une couche de nitrure (606) disposée par-dessus ladite couche d'oxyde (604) de ladite couche protectrice (602).

12. Dispositif selon la revendication 11, dans lequel ladite couche de nitrure (606) possède une épaisseur comprise dans la plage de 1200 Å (± 10 %).

13. Dispositif selon la revendication 11, dans lequel ladite couche d'oxyde (604) de ladite couche protectrice (602) possède une épaisseur comprise dans la plage de 840 Å (± 10 %).

14. Dispositif selon la revendication 11, dans lequel :
ladite couche d'oxyde (604) de ladite couche protectrice (602) possède une épaisseur comprise dans la plage de 840 Å (± 10 %) ; et
ladite couche de nitrure (606) possède une épaisseur comprise dans la plage de 1200 Å (± 10 %).

15. Procédé comprenant les étapes consistant à :
fournir un plan arrière afficheur réflectif (200) comprenant une pluralité de miroirs à pixels (108) définissant des espaces entre ceux-ci ;
former une couche de remplissage dans lesdits espaces et par-dessus lesdits miroirs à pixels (108), dans lequel ladite étape consistant à former ladite couche de remplissage comprend une étape consistant à former une couche d'oxyde (202) dans lesdits espaces et par-dessus lesdits miroirs à pixels (108) ; et
graver ladite couche de remplissage pour former une surface supérieure plane de ladite couche de remplissage,
**caractérisé en ce que**
ladite étape consistant à graver ladite couche de remplissage comprend l'étape consistant à graver ladite couche de remplissage pour former une couche de film mince optique par-dessus lesdits miroirs à pixels (108).

16. Procédé selon la revendication 15, comprenant en outre une étape consistant à déposer une couche de couverture par-dessus ladite couche de film mince optique.

17. Procédé selon la revendication 16, dans lequel ladite couche de couverture est optiquement inactive.

18. Procédé selon la revendication 16, dans lequel ladite couche de couverture possède une épaisseur comprise dans la plage de 640 Å (± 10 %).

19. Procédé selon la revendication 16, dans lequel ladite couche de couverture comprend une couche de nitrure.

20. Procédé selon la revendication 19, dans lequel :
ladite couche d'oxyde possède une épaisseur comprise dans la plage de 750 Å (± 10 %) ; et
ladite couche de nitrure possède une épaisseur comprise dans la plage de 640 Å (± 10 %).

21. Procédé selon la revendication 15, dans lequel ladite couche de film mince optique possède une épaisseur comprise dans la plage de 750 Å (± 10 %).

22. Procédé selon la revendication 15, comprenant en outre l'étape consistant à former une couche protectrice par-dessus ladite couche de remplissage suivant ladite étape consistant à graver ladite couche de remplissage.

23. Procédé selon la revendication 22, dans lequel ladite étape consistant à former ladite couche protectrice (602) comprend une étape consistant à former une couche de couverture sur ladite couche de remplissage et une étape consistant à former une couche d'oxyde (604) sur ladite couche de couverture (412).

24. Procédé selon la revendication 23, dans lequel ladite étape consistant à former ladite couche protectrice (602) comprend en outre une étape consistant à former une couche de nitrure (606) sur ladite couche d'oxyde (604).

25. Procédé selon la revendication 24, dans lequel ladite couche de nitrure (606) possède une épaisseur comprise dans la plage de 1200 Å (± 10 %).

26. Procédé selon la revendication 23, dans lequel ladite couche d'oxyde (604) possède une épaisseur comprise dans la plage de 840 Å (± 10 %).

27. Procédé selon la revendication 23, dans lequel ladite étape consistant à former ladite couche protectrice (602) comprend en outre une étape consistant à former une couche de nitrure (606) sur ladite couche d'oxyde (604).

28. Procédé selon la revendication 27, dans lequel :
ladite couche d'oxyde (604) possède une épaisseur comprise dans la plage de 840 Å (± 10 %) ; et
ladite couche de nitrure (606) possède une épaisseur comprise dans la plage de 1200 Å (± 10 %).

29. Procédé selon la revendication 15, dans lequel ladite étape consistant à graver ladite couche de remplissage comprend l'étape consistant à laisser au moins une certaine partie de ladite couche de remplissage par-dessus lesdits miroirs à pixels (108).
